# EUROPEAN PATENT APPLICATION

(11) **EP 2 551 101 A1**
(43) Date of publication of application: **30.01.2013**
(21) Application number: 11759427.5
(22) Date of filing: 23.03.2011
(51) Int. Cl.: B32B 1/08, B32B 27/32, B32B 27/34, F16L 11/04

(54) **FUEL HOSE**

(30) Priority: 24.03.2010 JP 2010068868
(71) Applicant: Tokai Rubber Industries, Ltd., Komaki-shi, Aichi 485-8550 (JP)
(72) Inventor: MIZUTANI Koji, Komaki-shi Aichi 485-8550 (JP); KATAYAMA Kazutaka, Komaki-shi Aichi 485-8550 (JP); KASAHARA Kazuhito, Komaki-shi Aichi 485-8550 (JP); TAKIMOTO Yorihiro, Komaki-shi Aichi 485-8550 (JP)
(74) Representative: Müller-Boré & Partner Patentanwälte
(86) International application number: PCT/JP2011/056958
(87) International publication number: WO 2011/118622

(57) **Abstract**

A fuel hose includes a tube-shaped inner layer 1 made of a resin composition (A) below and an outer layer 2 formed on an outer peripheral surface of the inner layer and made of a resin composition (B) below, wherein the following requirement (α) or (β) is satisfied. Therefore, there can be provided a lightweight fuel hose produced at low cost and having good low fuel permeability, interlayer adhesion, flexibility, low-temperature shock resistance, and heat resistance.
(A) a resin composition containing an aromatic polyamide resin as a main component
(B) a resin composition containing at least one of a polyolefin-based resin and an aliphatic polyamide resin as a main component
(α) The resin composition (B) contains at least one of acid-modified SEBS and acid-modified PMMA-PBA-PMMA.
(β) The resin composition (A) contains at least one of acid-modified SEBS and acid-modified PMMA-PBA-PMMA and the resin composition (B) contains amine-modified SEBS.

## Description

### Technical Field

The present invention relates to a fuel hose used as a transport hose for automotive fuels or the like (e.g., gasoline, alcohol-blended gasoline, and diesel fuel).

### Background Art

In recent years, in the automobile industry, the evaporation of fuel gas has been increasingly strictly regulated, and various low-permeation fuel hoses that satisfy the strict regulation have been investigated. Hoses made of a fluorocarbon resin have been used as fuel hoses. However, when low fuel permeability is more strictly required, the thickness of the fluorocarbon resin layer needs to be increased and thus the cost of hoses increases. Therefore, aromatic polyamide resins such as polyphenylene sulfide resin (PPS) and polyamide 9T (PA9T) and aromatic polyester resins such as polybutylene terephthalate (PBT) have been receiving attention as resins that are cheaper than fluorocarbon resins and that have good low fuel permeability. Various hoses including a low-fuel-permeability layer composed of the above-described resin have been proposed recently (e.g., refer to PTLs 1 to 3).

### Citation List

### Patent Literature

PTL 1: Japanese Unexamined Patent Application Publication No. 10-138372
PTL 2: Japanese Unexamined Patent Application Publication No. 2003-287165
PTL 3: Japanese Unexamined Patent Application Publication No. 2003-110736

### Summary of Invention

### Technical Problem

However, PPS and PBT have a high specific gravity, which increases the weight of hoses. This does not contribute to the increase in gas mileage of automobiles. Furthermore, low-fuel-permeability resins such as PPS, PBT, and PA9T have high rigidity. A single layer hose composed of only such a resin has poor flexibility and, particularly, is vulnerable to a shock at low temperature, which easily causes the breakage of hoses. To solve the problems, there has been proposed a hose having a layered structure in which the thickness of the low-fuel-permeability layer composed of the above-described resin is decreased and a layer composed of a flexible thermoplastic resin such as a polyamide resin or a polyethylene resin is formed on the outer peripheral surface of the low-fuel-permeability layer. However, sufficient low-temperature shock resistance has not been achieved.

The above-described low-fuel-permeability resins have poor adhesion with other materials. When the low-fuel-permeability layer and the thermoplastic resin layer are laminated with each other, an adhesive layer normally needs to be formed at an interface between the layers. This poses problems in that the production process becomes complicated due to the formation of the adhesive layer and the weight of hoses is increased.

In view of the foregoing, an object of the present invention is to provide a lightweight fuel hose produced at low cost and having good low fuel permeability, interlayer adhesion, flexibility, low-temperature shock resistance, and heat resistance.

### Solution to Problem

To achieve the object above, a fuel hose of the present invention includes a tube-shaped inner layer made of a resin composition (A) below and an outer layer formed on an outer peripheral surface of the inner layer and made of a resin composition (B) below, wherein the inner layer and the outer layer are bonded to each other through interlayer adhesion, and the following requirement (α) or (β) is satisfied.
(A) a resin composition containing an aromatic polyamide resin as a main component
(B) a resin composition containing at least one of a polyolefin-based resin and an aliphatic polyamide resin as a main component
(α) The resin composition (B) contains at least one of acid-modified polystyrene-poly(ethylene/butylene)block-polystyrene [acid-modified SEBS] and acid-modified polymethyl methacrylate-polybutyl acrylate-polymethyl methacrylate [acid-modified PMMA-PBA-PMMA].
(β) The resin composition (A) contains at least one of acid-modified polystyrene-poly(ethylene/butylene)block-polystyrene [acid-modified SEBS] and acid-modified polymethyl methacrylate-polybutyl acrylate-polymethyl methacrylate [acid-modified PMMA-PBA-PMMA] and the resin composition (B) contains amine-modified polystyrene-poly(ethylene/butylene)block-polystyrene [amine-modified SEBS].

To solve the problems above, the inventors of the present invention have started research on hoses whose flexibility is increased by forming an outer layer composed of a polyolefin-based resin such as high-density polyethylene (HDPE) or an aliphatic polyamide resin such as PA12, which are lightweight and flexible, on the outer peripheral surface of an inner layer composed of an aromatic polyamide resin such as PA9T, which has advantages in low fuel permeability and cost, and hoses that can contribute to the increase in gas mileage by decreasing the total weight of hoses. However, in such a layered structure, the interlayer adhesive strength between the inner layer and the outer layer needs to be increased as described above. As a result of eager study for solving the problem, the inventors have conceived that, by blending a modified elastomer, which is an elastomer modified so as to have a counterion of the aromatic polyamide resin such as PA9T, in a material for the outer layer, the interlayer adhesion between the inner layer and the outer layer is provided without using an adhesive while flexibility is imparted to the outer layer. The inventors have repeatedly conducted various experiments and consequently have found the following. By blending an acid-modified elastomer such as acid-modified SEBS (SEBS modified with maleic anhydride or the like) having high compatibility with a material for the outer layer in the material for the outer layer, both carboxyl end groups (COOH groups) of the elastomer are caused to react with an amino end group (NH₂ group) of the aromatic polyamide resin, which is a material for the inner layer, to form an amide bond, and thus desired interlayer adhesive strength is achieved. Herein, by further blending amine-modified SEBS in a material for the inner layer as an elastomer having high compatibility with the aromatic polyamide resin, both end groups (NH₂) of the amine-modified SEBS are caused to react with both carboxyl end groups of the acid-modified elastomer such as acid-modified SEBS and thus higher interlayer adhesive strength is achieved. Also in the case where, on the basis of this principle, an acid-modified elastomer such as acid-modified SEBS is blended in a material for the inner layer composed of the aromatic polyamide resin such as PA9T and an amine-modified SEBS is blended in a material for the outer layer, high interlayer adhesive strength is achieved. Advantageous Effects of Invention

As described above, the fuel hose of the present invention includes a tube-shaped inner layer made of a resin composition containing an aromatic polyamide resin such as PA9T as a main component and an outer layer made of a resin composition containing a polyolefin-based resin and/or an aliphatic polyamide resin as a main component, wherein the resin composition for forming the outer layer contains acid-modified SEBS and/or acid-modified PMMA-PBA-PMMA [requirement (α)], or the resin composition for forming the inner layer contains acid-modified SEBS and/or acid-modified PMMA-PBA-PMMA and the resin composition for forming the outer layer contains amine-modified SEBS [requirement (β)]. Therefore, the fuel hose of the present invention is a lightweight fuel hose having good interlayer adhesion, low fuel permeability, flexibility, low-temperature shock resistance, and heat resistance. In the fuel hose of the present invention, the layers can be bonded to each other without using an adhesive and the cost of materials is low. Thus, a fuel hose with high performance can be produced at low cost.

In particular, when the requirement (α) is satisfied and the resin composition for forming the inner layer contains amine-modified SEBS, higher interlayer adhesive strength is achieved.

When the layer containing a modified elastomer, which is the modified SEBS and/or the acid-modified PMMA-PBA-PMMA in the requirement (α) or (β), is composed of an alloy material whose domain is formed by the modified elastomer, higher interlayer adhesive strength is achieved.

When the fuel hose further includes an innermost layer on an inner peripheral surface of the inner layer, the innermost layer being composed of a fluorocarbon resin, better low fuel permeability is achieved.

### Brief Description of Drawing

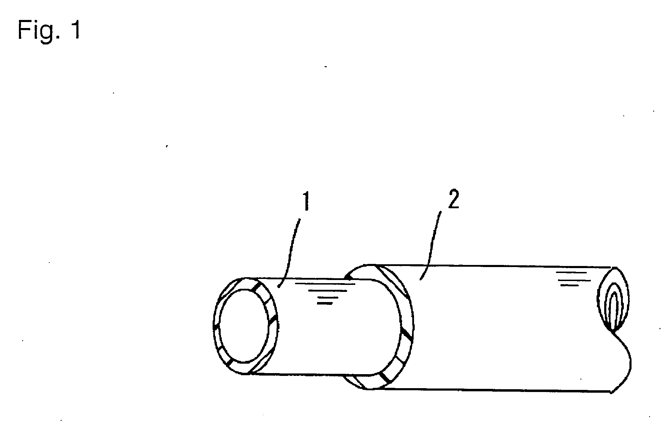

[Fig. 1] Fig. 1 shows an example of a fuel hose of the present invention.

### Description of Embodiments

An embodiment of the present invention will now be described.

As shown in Fig. 1, a fuel hose of the present invention includes an tube-shaped inner layer 1 that allows fuel to flow therein and an outer layer 2 formed on the outer peripheral surface of the inner layer 1. The inner layer 1 is made of a resin composition (A) below. The outer layer 2 is made of a resin composition (B) below. In this fuel hose, the inner layer 1 and the outer layer 2 are bonded to each other through interlayer adhesion, and the following requirement (α) or (β) is satisfied.
Note that the term "main component" of the resin compositions (A) and (B) below is a component that significantly affects the characteristics of the entire resin composition. In the present invention, the content of the main component is 50% or more by weight.
(A) a resin composition containing an aromatic polyamide resin as a main component
(B) a resin composition containing at least one of a polyolefin-based resin and an aliphatic polyamide resin as a main component
(α) The resin composition (B) contains at least one of acid-modified polystyrene-poly(ethylene/butylene)block-polystyrene [acid-modified SEBS] and acid-modified polymethyl methacrylate-polybutyl acrylate-polymethyl methacrylate [acid-modified PMMA-PBA-PMMA].
(β) The resin composition (A) contains at least one of acid-modified polystyrene-poly(ethylene/butylene)block-polystyrene [acid-modified SEBS] and acid-modified polymethyl methacrylate-polybutyl acrylate-polymethyl methacrylate [acid-modified PMMA-PBA-PMMA] and the resin composition (B) contains amine-modified polystyrene-poly(ethylene/butylene)block-polystyrene [amine-modified SEBS].

In the case where the requirement (α) is satisfied, the content of the acid-modified SEBS and the acid-modified polymethyl methacrylate-polybutyl acrylate-polymethyl methacrylate [acid-modified PMMA-PBA-PMMA] in the resin composition (B), which is a material for the outer layer 2, is preferably 1.5 to 50% by weight and more preferably 5 to 20% by weight. If the content is less than 1.5% by weight, a desired interlayer adhesion effect is not produced. If the content is more than 50% by weight, the material for the outer layer is dissolved in a fuel oil [e.g., Fuel C/M15 (blended fuel solution containing 85% by volume of Fuel C and 15% by volume of methanol)].

In the case where the requirement (α) is satisfied, the resin composition (A), which is a material for the inner layer 1, preferably contains amine-modified SEBS because higher interlayer adhesive strength is achieved. However, since the inner layer 1 provides low fuel permeability, the content of the amine-modified SEBS in the resin composition (A) is preferably less than 50% by weight so that the low fuel permeability is not impaired.

In the case where the requirement (β) is satisfied, the content of the acid-modified SEBS and the acid-modified PMMA-PBA-PMMA in the resin composition (A) is preferably 2.0 to 30% by weight and more preferably 5 to 20% by weight, and the content of the amine-modified SEBS in the resin composition (B) is preferably 1.5 to 50% by weight and more preferably 5 to 20% by weight. By setting the contents in such ranges, a desired interlayer adhesion effect is produced without impairing the low fuel permeability.

When the layer containing a modified elastomer, which is at least one of the modified SEBS and the acid-modified PMMA-PBA-PMMA in the requirement (α) or (β), is composed of an alloy material whose domain is formed by the modified elastomer, higher interlayer adhesive strength is achieved. Whether or not the layer is composed of an alloy material can be confirmed through observation with a scanning electron microscope (SEM).

Examples of the aromatic polyamide resin used as a material for the inner layer 1 include polyamide 4T (PA4T), polyamide 6T (PA6T), polyamide MXD6 (PAMXD6), polyamide 9T (PA9T), polyamide 10T (PA10T), polyamide 11T (PA11T), polyamide 12T (PA12T), and polyamide 13T (PA13T). These resins may be used alone or in combination. In particular, PA9T is preferably used in terms of flexibility and barrier property.

Examples of the polyolefin-based resin used as a material for the outer layer 2 include high-density polyethylene (HDPE), low-density polyethylene (LDPE), polypropylene, polybutene, polymethylpentene, α-polyolefin, and modified polyolefin (e.g., maleic anhydride- or epoxy-modified polyethylene). These resins may be used alone or in combination. In particular, HDPE is preferably used in terms of high-temperature sealing property.

Examples of the aliphatic polyamide resin used as a material for the outer layer 2 include polyamide 46 (PA46), polyamide 6 (PA6), polyamide 66 (PA66), polyamide 99 (PA99), polyamide 610 (PA610), polyamide 612 (PA612), polyamide 11 (PA11), polyamide 912 (PA912), polyamide 12 (PA12), a copolymer (PA6/66) of polyamide 6 and polyamide 66, and a copolymer (PA6/12) of polyamide 6 and polyamide 12. These resins may be used alone or in combination.

The amine-modified SEBS blended in the material for the inner layer 1 or the material for the outer layer 2 can be obtained, for example, by causing SEBS to react with a modifying agent having an amino group upon the completion of copolymerization and then by performing hydrogenation.

The acid-modified SEBS blended in the material for the inner layer 1 or the material for the outer layer 2 can be obtained, for example, by modifying SEBS with a carboxyl group, a carbonyl group, a thiocarbonyl group, a carboxylic acid group, a thiocarboxylic acid group, an aldehyde group, a thioaldehyde group, a sulfonic acid group, a sulfonic acid ester group, a phosphoric acid group, a phosphoric acid ester group, a maleic anhydride group, an acrylic acid group, a methacrylic acid group, or the like. They may be used alone or in combination. Among the acid-modified SEBS's, maleic anhydride-modified SEBS is preferably used in terms of high reactivity with the resin that is a main component of the layer forming material.

The acid-modified PMMA-PBA-PMMA blended in the material for the inner layer 1 or the material for the outer layer 2 can be obtained, for example, by modifying PMMA-PBA-PMMA with a carboxyl group, a carbonyl group, a thiocarbonyl group, a carboxylic acid group, a thiocarboxylic acid group, an aldehyde group, a thioaldehyde group, a sulfonic acid group, a sulfonic acid ester group, a phosphoric acid group, a phosphoric acid ester group, a maleic anhydride group, an acrylic acid group, a methacrylic acid group, or the like. They may be used alone or in combination. Among the acid-modified PMMA-PBA-PMMA's, maleic anhydride-modified PMMA-PBA-PMMA is preferably used in terms of high reactivity with the resin that is a main component of the layer forming material.

In addition to the resin, which is a main component, and the modified SEBS and acid-modified PMMA-PBA-PMMA added to the resin, the following additives may be optionally added to the material for the inner layer 1 and the material for the outer layer 2. Examples of the additives include pigments such as carbon black and titanium oxide; fillers such as calcium carbonate; plasticizers such as fatty acid esters and mineral oil; hindered phenol antioxidants; antioxidants such as phosphorus-based heat stabilizers; lubricants such as stearic acid, calcium stearate, and magnesium stearate; ultraviolet absorbers; antistatic agents; reinforcing agents such as organic fiber, glass fiber, carbon fiber, and metal whisker; and flame retardants.

The fuel hose of the present invention shown in Fig. 1 can be produced as follows. The material for the inner layer 1 and the material for the outer layer 2 described above are prepared. In the case where a modified elastomer such as modified SEBS or acid-modified PMMA-PBA-PMMA is blended in a resin that is a main component of the layer forming material, the layer forming material needs to be prepared by homogenously kneading the components with a biaxial kneading extruder (TEX 30α manufactured by The Japan Steel Works, Ltd.) (the material for the inner layer is kneaded at 260 to 330°C and the material for the outer layer is kneaded at 200 to 250°C). Subsequently, the material for the inner layer 1 is extruded with an extruder for the inner layer 1 and the material for the outer layer 2 is extruded with an extruder for the outer layer 2 so that the materials join together in a single die. The coextruded molten tube is made to pass through a sizing die, and thus a fuel hose having a two-layer structure in which the outer layer 2 is formed on the outer peripheral surface of the inner layer 1 can be produced.

In the case where a fuel hose having a pleated shape is produced, the coextruded molten tube is made to pass through a corrugating machine, and thus a pleated hose with a predetermined size can be produced.

In the thus-obtained fuel hose of the present invention, the inner diameter is preferably 1 to 40 mm and more preferably 2 to 36 mm. The outer diameter is preferably 2 to 44 mm and more preferably 3 to 40 mm. The thickness of the inner layer 1 is preferably 0.02 to 1.0 mm and more preferably 0.05 to 0.6 mm. The thickness of the outer layer 2 is preferably 0.03 to 1.5 mm and more preferably 0.05 to 1.0 mm.

The structure of the fuel hose of the present invention is not limited to the two-layer structure shown in Fig. 1, and may be a three-layer structure in which, for example, an innermost layer is formed on the inner peripheral surface of the inner layer 1.

The innermost layer is preferably composed of a fluorocarbon resin because the fuel hose of the present invention has better low fuel permeability. Examples of the fluorocarbon resin include polyvinyl fluoride (PVF), polyvinylidene fluoride (PVDF), polychlorotrifluoroethylene (CTFE), and polytetrafluoroethylene (PTFE); copolymers such as a tetrafluoroethylene-hexafluoropropylene copolymer (FEP), a tetrafluoroethylene-perfluoroalkylvinylether copolymer (PFA), a tetrafluoroethylene-hexafluoropropylene-vinylidene fluoride copolymer (THV), an ethylene-tetrafluoroethylene copolymer (ETFE), and an ethylene-polychlorotrifluoroethylene copolymer (ECTFE); modified copolymers thereof; various graft polymers and blends; and conductive fluorocarbon resins to which conductivity is imparted by adding carbon black, carbon fiber, carbon nanotube, a conductive polymer, or the like to the above resin. These resins may be used alone or in combination.

The fuel hose of the present invention including the innermost layer formed on the inner peripheral surface of the inner layer 1 can be produced as follows. A material for the innermost layer is prepared. The material is extruded with an extruder for the innermost layer and the materials for the inner layer 1 and outer layer 2 are extruded so that the three materials join together in a single die. The coextruded molten tube is made to pass through a sizing die, and thus a fuel hose including the innermost layer formed on the inner peripheral surface of the inner layer 1 can be produced.

The thickness of the innermost layer is preferably 0.03 to 0.5 mm and more preferably 0.05 to 0.3 mm.

The fuel hose of the present invention may optionally include, for example, an outermost layer formed on the outer peripheral surface of the outer layer 2.

The fuel hose of the present invention is suitably used as a transport hose for automotive fuels such as gasoline, alcohol-blended gasoline, diesel fuel, compressed natural gas (CNG), and liquefied petroleum gas (LPG), but is not limited thereto. The fuel hose of the present invention can also be used as a transport hose for fuel-cell-powered vehicle fuels such as methanol, hydrogen, and dimethyl ether (DME).

### Examples

Examples will now be described together with Comparative Examples. The present invention is not limited to Examples.

First, the following materials were prepared prior to Examples and Comparative Examples.

[PA9T]
N1001A manufactured by KURARAY CO., LTD.

[HDPE]
HB111R manufactured by Japan Polyethylene Corporation

[Amine-modified SEBS]
Tuftec M10 manufactured by Asahi Kasei Chemicals Corporation

[Acid-modified SEBS]
Tuftec M1913 manufactured by Asahi Kasei Chemicals Corporation

[Acid-modified PMMA-PBA-PMMA]
NABSTAR (acid-modified product) manufactured by KANEKA CORPORATION

[PA12]
AESN P20TL manufactured by Arkema K.K.

[PA610]
CM2402 manufactured by Toray Industries, Inc.

[PA612]
7034U manufactured by Ube Industries, Ltd.

[Fluorocarbon resin]
RP5000 manufactured by DAIKIN INDUSTRIES, Ltd.

[Conductive fluorocarbon resin]
RP5000AS manufactured by DAIKIN INDUSTRIES, Ltd.

A hose was produced using the above materials as described below.

### [Examples 1 to 15 and Comparative Examples 1 to 9]

Materials for an innermost layer (only Examples 12 to 15), materials for an inner layer, and materials for an outer layer shown in Tables 1 to 5 below were prepared and subjected to hot melt extrusion (coextrusion) using respective extruders so that the three materials joined together in a single die. Each of the coextruded molten tubes was made to pass through a sizing die to produce a smooth hose having an inner diameter of 6 mm. If layer forming materials are not mentioned in Tables 1 to 5, layers are not formed. In Tables 1 to 5 below, the layer forming materials each containing a polymer such as PA9T, HDPE, or PA12 and a modified elastomer such as modified SEBS or acid-modified PMMA-PBA-PMMA were obtained by performing homogenous kneading (the material for the inner layer was kneaded at 260 to 330°C and the material for the outer layer was kneaded at 200 to 250°C) using a biaxial kneading extruder (TEX 30α manufactured by The Japan Steel Works, Ltd.) with the weight percentages (wt%) shown in Tables 1 to 5. Furthermore, it was confirmed through observation with a scanning electron microscope (SEM) that the hardened product of each of the layer forming materials was composed of an alloy material whose matrix was formed by the polymer and whose domain was formed by the modified elastomer such as modified SEBS. When the produced smooth hose had a single layer structure, the thickness of the layer was 1 mm. When the smooth hose had a two-layer structure, the thickness of the inner layer was 0.3 mm and the thickness of the outer layer was 0.7 mm. When the smooth hose had a three-layer structure, the thickness of the innermost layer was 0.05 mm, the thickness of the inner layer was 0.25 mm, and the thickness of the outer layer was 0.7 mm.

**[Table 1]**

| | Example | | | | | |
|---|---|---|---|---|---|---|
| | 1 | 2 | 3 | 4 | 5 | 6 |
| Material for inner layer | PA9T | PA9T | PA9T | PA9T | PA9T | PA9T |
| | 100 wt% | 100 wt% | 98.5 wt% | 98.0 wt% | 100 wt% | 98.0 wt% |
| | - | - | Acid-modified SEBS | Acid-modified SEBS | - | Acid-modified SEBS |
| | - | - | 1.5 wt% | 2.0 wt% | - | 2.0 wt% |
| Material for outer layer | HDPE | HDPE | HDPE | HDPE | PA12 | PA12 |
| | 99.0 wt% | 98.5 wt% | 98.5 wt% | 98.0 wt% | 98.5 wt% | 98.0 wt% |
| | Acid-modified SEBS | Acid-modified SEBS | Amine-modified SEBS | Amine-modified SEBS | Acid-modified SEBS | Amine-modified SEBS |
| | 1.0 wt% | 1.5 wt% | 1.5 wt% | 2.0 wt% | 1.5 wt% | 2.0 wt% |

**[Table 2]**

| | Example | | | | |
|---|---|---|---|---|---|
| | 7 | 8 | 9 | 10 | 11 |
| Material for inner layer | PA9T | PA9T | PA9T | PA9T | PA9T |
| | 100 wt% | 100 wt% | 100 wt% | 100 wt% | 98.0 wt% |
| | - | - | - | - | Acid-modified PMMA-PBA-PMMA |
| | - | - | - | - | 2.0 wt% |
| Material for outer layer | HDPE | HDPE | PA610 | PA612 | HDPE |
| | 50.0 wt% | 98.0 wt% | 98.5 wt% | 98.5 wt% | 98.0 wt% |
| | Acid-modified SEBS | Acid-modified PMMA-PBA-PMMA | Acid-modified SEBS | Acid-modified SEBS | Amine-modified SEBS |
| | 50.0 wt% | 2.0wt% | 1.5 wt% | 1.5 wt% | 2.0 wt% |

**[Table 3]**

| | Example | | | |
|---|---|---|---|---|
| | 12 | 13 | 14 | 15 |
| Material for innermost layer | Fluorocarbon resin | Conductive fluorocarbon resin | Fluorocarbon resin | Fluorocarbon resin |
| | 100 wt% | 100 wt% | 100 wt% | 100 wt% |
| Material for inner layer | PA9T | PA9T | PA9T | PA9T |
| | 98.0 wt% | 98.0 wt% | 98.0 wt% | 98.0 wt% |
| | Acid-modified SEBS | Acid-modified SEBS | Acid-modified SEBS | Acid-modified SEBS |
| | 2.0 wt% | 2.0 wt% | 2.0 wt% | 2.0 wt% |
| Material for outer layer | PA12 | PA12 | PA610 | PA612 |
| | 98.0 wt% | 98.0 wt% | 98.0 wt% | 98.0 wt% |
| | Amine-modified SEBS | Amine-modified SEBS | Amine-modified SEBS | Amine-modified SEBS |
| | 2.0 wt% | 2.0 wt% | 2.0 wt% | 2.0 wt% |

**[Table 4]**

| | Comparative Example | | | | | |
|---|---|---|---|---|---|---|
| | 1 | 2 | 3 | 4 | 5 | 6 |
| Material for inner layer | PA9T | HDPE | PA9T | PA9T | PA9T | PA12 |
| | 100 wt% | 100 wt% | 100 wt% | 100 wt% | 100 wt% | 100 wt% |
| Material for outer layer | - | - | HDPE | Amine-modified SEBS | Acid-modified SEBS | - |
| | - | - | 100 wt% | 100 wt% | 100 wt% | - |

**[Table 5]**

| | Comparative Example | | |
|---|---|---|---|
| | 7 | 8 | 9 |
| Material for inner layer | PA9T | PA9T | PA9T |
| | 100 wt% | 100 wt% | 100 wt% |
| Material for outer layer | PA12 | PA610 | PA612 |
| | 100 wt% | 100 wt% | 100 wt% |

The characteristics of the thus-obtained hoses of Examples and Comparative Examples were evaluated in accordance with the criteria below. Tables 6 to 10 collectively show the results.

### [Fuel oil resistance]

Each of the hoses was cut into strips having a width of 10 mm to obtain a sample. The sample was immersed in Fuel C/M15 (blended fuel solution containing 85% by volume of Fuel C and 15% by volume of methanol) at 60°C for 168 hours. The state of dissolution of each layer of the immersed sample was evaluated through visual inspection. When no layer was dissolved, an evaluation of "O" was given. When at least one layer was dissolved, an evaluation of "x" was given.

### [Fuel permeation rate]

Regarding each of the hoses, the permeation coefficient (unit: mg/m/day) of an alcohol-blended model gasoline obtained by mixing toluene/isooctane/ethanol at a volume ratio of 45:45:10 was measured at 40°C for one month using a constant-pressure permeation rate measuring apparatus for hoses (GTR-TUBE3-TG manufactured by GTR Tec Corporation). The value shown in Tables is a value when equilibrium is reached. When the value was less than 50 (mg/m/day), an evaluation of "O" was given. When the value was 50 (mg/m/day) or more, an evaluation of "x" was given.

### [Interlayer adhesive strength]

Each of the hoses was cut into strips having a width of 10 mm to obtain a sample. The sample was delaminated into its constituent layers (inner layer/outer layer in Examples 1 to 11 and Comparative Examples 3 to 5 and 7 to 9, innermost layer/inner layer and inner layer/outer layer in Examples 12 to 15). The layers were then each set in a chuck of a tensile testing machine, and 180° peel strength (N/cm) was measured at a cross head speed of 50 mm/minute. In terms of interlayer adhesion, when the peel strength was 20 N/cm or more, an evaluation of "O" was given. When the peel strength was 10 N/cm or more and less than 20 N/cm, an evaluation of "Δ" was given. When the peel strength was less than 10 N/cm, an evaluation of "x" was given. In the present invention, an evaluation of "O" or "Δ" is required.

### [Low-temperature flexibility]

Each of the hoses was left in a low-temperature (-40°C) environment for 24 hours and then bent at an angle of 90°. When defects such as cracks and breakage were observed, an evaluation of "×" was given. When no defects were observed, an evaluation of "O" was given.

**[Table 6]**

| | | | Example | | | | | |
|---|---|---|---|---|---|---|---|---|
| | | | 1 | 2 | 3 | 4 | 5 | 6 |
| Fuel oil resistance | | State | Not dissolved | Not dissolved | Not dissolved | Not dissolved | Not dissolved | Not dissolved |
| | | Evaluation | O | O | O | O | O | O |
| Fuel permeation rate (mg/m/day) | | | 8.2 | 8.5 | 14.2 | 18.2 | 8 | 16.2 |
| | | Evaluation | O | O | O | O | O | O |
| Interlayer adhesive strength (N/cm) | Inner layer /Outer layer | | 14 | 24 | 16 | 22 | 22 | 21 |
| | Evaluation | | Δ | O | Δ | O | O | O |
| Low-temperature flexibility | | | O | O | O | O | O | O |

**[Table 7]**

| | | | Example | | | | |
|---|---|---|---|---|---|---|---|
| | | | 7 | 8 | 9 | 10 | 11 |
| Fuel oil resistance | | State | Not dissolved | Not dissolved | Not dissolved | Not dissolved | Not dissolved |
| | | Evaluation | O | O | O | O | O |
| Fuel permeation rate (mg/m/day) | | | 8.4 | 8.3 | 8.6 | 8.8 | 18.8 |
| | | Evaluation | O | O | O | O | O |
| interlayer adhesive strength (N/cm) | Inner layer /Outer layer | | 27.5 | 26 | 32 | 30 | 30 |
| | Evaluation | | O | O | O | O | O |
| Low-temperature flexibility | | | O | O | O | O | O |

**[Table 8]**

| | | | Example | | | |
|---|---|---|---|---|---|---|
| | | | 12 | 13 | 14 | 15 |
| Fuel oil resistance | | State | Not dissolved | Not dissolved | Not dissolved | Not dissolved |
| | | Evaluation | O | O | O | O |
| Fuel permeation rate (mg/m/day) | | | 11.2 | 10.8 | 10.2 | 10.6 |
| | | Evaluation | O | O | O | O |
| Interlayer adhesive strength (N/cm) | Innermost layer/Inner layer | | 26 | 28 | 34 | 32 |
| | Inner layer /Outer layer | | 24 | 24 | 32 | 30 |
| | Evaluation | | O | O | O | O |
| Low-temperature flexibility | | | O | O | O | O |

**[Table 9]**

| | | | Comparative Example | | | | | |
|---|---|---|---|---|---|---|---|---|
| | | | 1 | 2 | 3 | 4 | 5 | 6 |
| Fuel oil resistance | | State | Not dissolved | Not dissolved | Not dissolved | Outer layer dissolved | Outer layer dissolved | Not dissolved |
| | | Evaluation | O | O | O | × | × | O |
| Fuel permeation rate (mg/m/day) | | | 6.2 | 445 | 8.4 | 8.6 | 8.2 | 110 |
| | | Evaluation | O | × | O | O | O | × |
| Interlayer adhesive strength (N/cm) | Inner layer /Outer layer | | - | - | 0.6 | 0.8 | 32 | - |
| | Evaluation | | - | - | × | × | O | - |
| Low-temperature flexibility | | | × | O | × | × | O | O |

**[Table 10]**

| | | | Comparative Example | | |
|---|---|---|---|---|---|
| | | | 7 | 8 | 9 |
| Fuel oil resistance | | State | Not dissolved | Not dissolved | Not dissolved |
| | | Evaluation | O | O | O |
| Fuel permeation rate (mg/m/day) | | | 8.6 | 8.5 | 8.4 |
| | | Evaluation | O | O | O |
| Interlayer adhesive strength (N/cm) | Inner layer /Outer layer | | 0.9 | 5 | 7 |
| | Evaluation | | × | × | × |
| Low-temperature flexibility | | | × | × | × |

As is clear from the results above, the hoses of Examples each had a low fuel permeation rate and good fuel oil resistance, interlayer adhesion, and low-temperature flexibility.

In contrast, the hose of Comparative Example 1 having a PA9T single layer structure had poor low-temperature flexibility. The hose of Comparative Example 2 having an HDPE single layer structure had good low-temperature flexibility, but a high fuel permeation rate. Thus, the hose of Comparative Example 2 is not suitable for fuel hoses. The hose of Comparative Example 3 had a layered structure including a PA9T inner layer and an HDPE outer layer, but a certain modified elastomer was not contained in either of the layers. Thus, the hose of Comparative Example 3 had poor interlayer adhesion and low-temperature flexibility. The hose of Comparative Example 4 had a layered structure including a PA9T inner layer and an amine-modified SEBS outer layer, but the outer layer was dissolved in a test for fuel oil resistance. The hose of Comparative Example 4 also had poor interlayer adhesion and low-temperature flexibility. The hose of Comparative Example 5 had a layered structure including a PA9T inner layer and an acid-modified SEBS outer layer, but the outer layer was dissolved in a test for fuel oil resistance as in Comparative Example 4. The hose of Comparative Example 6 having a PA12 single layer structure had a high fuel permeation rate and thus is not suitable for fuel hoses. The hoses of Comparative Examples 7 to 9 each had a layered structure including a PA9T inner layer and an aliphatic polyamide resin (PA12, PA610, PA612) outer layer, but a certain modified elastomer was not contained in either of the layers. Thus, the hoses of Comparative Examples 7 to 9 had poor interlayer adhesion and low-temperature flexibility.

In Examples above, specific configurations of the present invention have been described. However, Examples above are merely examples and the present invention should not be interpreted in a restrictive manner. Furthermore, all modifications and alterations within the scope of the claims are within the scope of the present invention.

### Industrial Applicability

The fuel hose of the present invention can be suitably used as a transport hose for automotive fuels such as gasoline, alcohol-blended gasoline, diesel fuel, compressed natural gas (CNG), and liquefied petroleum gas (LPG). Reference Signs List

- 1: inner layer
- 2: outer layer

## Claims

1. A fuel hose comprising a tube-shaped inner layer made of a resin composition (A) below and an outer layer formed on an outer peripheral surface of the inner layer and made of a resin composition (B) below,
(A) a resin composition containing an aromatic polyamide resin as a main component
(B) a resin composition containing at least one of a polyolefin-based resin and an aliphatic polyamide resin as a main component
wherein the inner layer and the outer layer are bonded to each other through interlayer adhesion, and the following requirement (α) or (β) is satisfied:
(α) the resin composition (B) contains at least one of acid-modified polystyrene-poly(ethylene/butylene)block-polystyrene [acid-modified SEBS] and acid-modified polymethyl methacrylate-polybutyl acrylate-polymethyl methacrylate [acid-modified PMMA-PBA-PMMA]; and
(β) the resin composition (A) contains at least one of acid-modified polystyrene-poly(ethylene/butylene)block-polystyrene [acid-modified SEBS] and acid-modified polymethyl methacrylate-polybutyl acrylate-polymethyl methacrylate [acid-modified PMMA-PBA-PMMA] and the resin composition (B) contains amine-modified polystyrene-poly(ethylene/butylene)block-polystyrene [amine-modified SEBS] .

2. The fuel hose according to Claim 1, wherein the requirement (α) is satisfied, and the content of the acid-modified SEBS and the acid-modified PMMA-PBA-PMMA in the resin composition (B) is 1.5 to 50% by weight.

3. The fuel hose according to Claim 1 or 2, wherein the requirement (α) is satisfied, and the resin composition (A) contains amine-modified SEBS.

4. The fuel hose according to Claim 1, wherein the requirement (β) is satisfied, the content of the acid-modified SEBS and the acid-modified PMMA-PBA-PMMA in the resin composition (A) is 2.0 to 30% by weight, and the content of the amine-modified SEBS in the resin composition (B) is 1.5 to 50% by weight.

5. The fuel hose according to any one of Claims 1 to 4, wherein the layer containing a modified elastomer, which is at least one of the modified SEBS and the acid-modified PMMA-PBA-PMMA in the requirement (α) or (β), is composed of an alloy material whose domain is formed by the modified elastomer.

6. The fuel hose according to any one of Claims 1 to 5, further comprising an innermost layer on an inner peripheral surface of the inner layer, the innermost layer being composed of a fluorocarbon resin.
